# EUROPEAN PATENT SPECIFICATION

(11) **EP 2 499 228 B1**
(45) Date of publication and mention of the grant of the patent: **06.11.2013**
(21) Application number: 10782531.7
(22) Date of filing: 10.11.2010
(51) Int. Cl.: C12C 7/06, C12C 7/16, B01D 11/02

(54) **A SEPARATION APPARATUS AND A SEPARATION METHOD**
TRENNUNGSVORRICHTUNG UND TRENNUNGSVERFAHREN
APPAREIL ET PROCÉDÉ DE SÉPARATION

(30) Priority: 10.11.2009 EP 09175545; 13.11.2009 US 260872 P
(43) Date of publication of application: 19.09.2012
(73) Proprietor: Technical University of Denmark, 2800 Kgs. Lyngby (DK)
(72) Inventor: HANSEN, Preben, Bøje, DK-2800 Lyngby (DK); STUBBE, Peter, DK-3460 Birkerød (DK)
(74) Representative: Høiberg A/S
(86) International application number: PCT/DK2010/050303
(87) International publication number: WO 2011/057639

(56) References cited:
- EP-A1- 0 673 997
- WO-A2-01/12773
- DE-A1- 10 003 155
- DE-A1-102005 012 076
- DE-C1- 3 628 726
- US-A- 3 039 611
- US-A- 4 844 932

## Description

The present invention relates to a separation and/or extraction apparatus as well as a method for separating substances using said apparatus. In particularly, said apparatus may be used for a mashing process as a part of a beer brewing procedure.

### BACKGROUND OF THE INVENTION

Beer is produced from grain by a mashing process wherein the grain is mixed with water and heated to appropriate temperatures. Brewing of beer normally takes place in mashing tubs, such as a lauter tun, and involves the steps of mashing, extraction, boiling, cooling, followed by fermentation with yeast. In the mashing step, the grain is mixed with hot water, and the aqueous extract produced is called wort. After mashing, hops and spices may added to the wort, and the wort is boiled. After cooling, the wort is moved into a fermentation vessel where yeast is added. WO 01/12773 discloses an apparatus and a method for extracting malt and separating wort from mash solids in a brewing process.

A lauter tub is disclosed in US 3,782,551 wherein wort is produced by filtering mash in a vessel with a filtering sleeve fixed to the vessel. The wort produced by the vessel can be removed in separated streams, and, in addition, an agitator is used for mixing the water and the mash.

Another solution discussing separation of wort from mash is described in US 4,844,932, where the mashing is carried out by use of a cross-flow separation filter, which filter may consist of a diameter shell within which a tubular filter is housed. The wort is produced in a four-step separation process and the necessity of a reverse flow is mentioned in connection with the mash becoming resident on the filter or clogging the pores of the filter.

Also other organic materials such as plant material are subjected to soaking e.g. for extracting compounds from the organic material. Improving the formation of the used apparatus to improve the extraction process is desirable.

### SUMMARY OF THE INVENTION

The present invention relates to a separation and/or extraction apparatus, which is particularly suitable for the mashing process in the beer production. The present invention is also suitable in other processes involving soaking of substances or organic material or processes where a liquid is used to remove substances from an organic material e.g. by circulating the liquid in the apparatus as described herein.

The object of the invention involves a vessel having a movable insert member which basically functions as a sieve and allows for an extraction process, such as a mashing process. The insert member has a preferred shape which is discussed below. The substance to be subjected to the separation and/or extraction process, such as grain, may easily be arranged in the insert member; whereafter the insert member is arranged in the vessel followed by providing a flow of water, or the like, in order to begin the separation and/or extraction process, such as extracting wort from the grain. After this step of the separation and/or extraction process, it is straightforward to remove the insert member from the vessel and one may easily clean the insert and the vessel.

As compared to previous mashing processes and extraction processes cleaning is therefore less cumbersome, in particularly when compared to a technique wherein the grain is filled into a lauter tun having a perforated bottom portion.

In addition it has been found that by using the present separation apparatus a more effective separation and/or extraction process is possible, in particularly it has been found possible to extract more wort from the grain using the invention, since the grain inside the insert member can be agitated thoroughly and at the same time the grain remains trapped inside the insert member. Thus, the grain can be agitated in a manner which can be compared to shaking a rattle percussion instrument. It is hereby possible to extract more wort from the grain compared to existing techniques. In addition, other agitation techniques may be added as discussed below. A movable insert member has other advantages, it may for instance easily be replaced if a part breaks and in general it is easier to maintain and service, since it can be taken out to a place where it is easier to get to. Similarly, the vessel may easily be cleaned and serviced when the insert is taken out.

On this background, it is an object of the invention to provide a separation and/or extraction apparatus for extraction processes such as mashing having an improved filter means.

The object is achieved by a separation and/or extraction apparatus comprising a vessel having an outer vessel wall and an inner vessel wall, said inner vessel wall having a first sealing portion, an insert member comprising a container member, said container member having an outer container wall and an inner container wall, said container comprising a first portion having at least one first perforated portion; a second portion having a second sealing portion, and a third portion having at least one second perforated portion, a sealing member for sealing between the first sealing portion and the second sealing portion, said sealing member provided at a level of the vessel, said level dividing the inner space of the vessel into a first region and a second region, and said sealing member having a shape matching the first and second sealing portions; said first perforated portion provided in the first region, and said second perforated portion provided in the second region, a first pipe member connected to the first region, and a second pipe member connected to the second region.

### INSERT

Preferably, the insert member is adapted to hold a first substance, such as an amount of grain. In this context, it is preferred that the insert member comprises a container member, said container member having an outer container wall and an inner container wall, said container comprising a first portion having at least one first perforated portion, a second portion having a second sealing portion, and a third portion having at least one second perforated portion. The second portion is preferably a non-perforated portion which is advantageous for sealing purposes. In addition, the non-perforated portion assures that a substantially amount of circulated substance, such as water, is forced through the first substance inside the insert member. The first, second, and third portions are preferably provided so that the first portion is connected to the second portion, and the second portion is connected to the third portion. For instance, the three portions may be combined by welding. In a preferred embodiment, the first, second, and third portions are provided, respectively, as the top part, middle part and bottom part of the insert member. It is, however, understood that the invention may have other embodiments wherein the insert member is arranged otherwise, i.e. the terms 'top part' and 'bottom part' have been used only to illustrate the relative arrangement of elements of one embodiment of the invention, and it is realised that embodiments of the invention may be provided, wherein the invention is rotated in any angle, i.e. not limited to the terms 'top part' and 'bottom part' used above.

Related to the mentioned first, second and third portions, the insert member may have a bottom wall, a top wall, and side walls. In this embodiment the first portion is comprised of the top wall and the upper part of the side wall(s), whereas the second portion is comprises of a middle part of the side wall(s), and the third portion is comprised of the lower part of the side wall(s) and the bottom wall. For instance, the insert member may have the shape of a box, a cube, a barrel, or the like. The insert member may preferably have a circular cross section or may have a shape with rectangular, elliptical, triangular or other polygonal horizontal cross sections, such as for instance a hexagonal cross section. Further, insert member may be shaped as a sphere, a cone, a polyhedron, such as a pyramid, or as a combination of three-dimensional objects.

The first and/or second portion may comprise an opening means, such as a hingedly arranged opening portion, such as a hatch, hinged cover or the like. Further, the insert member may comprise a filter such as a sieve having openings, such as round or slit perforations, such as openings sized 100 mm to 100 nm, or e.g. in the range from 10 mm to 1 micrometer such as for instance sized 1 mm to 10 micrometer, or in the range from 500 micrometer to 100 micrometer, such as preferably 300 micrometer sized openings.

### AREA/HEIGHT RATIO OF INSERT

In a related preferred embodiment, the second portion comprises a section with a height h, such as a cylinder-shaped section, and the first portion comprises a first perforated end portion, such as a circular end portion, with an area A. The A/h ratio is important because a blockage of enclosed substance could develop inside the insert member if the A/h ratio is too small, and a non-efficient filtering process may take place if the A/h ratio is too large. For instance, if a circulated substance, such as water, is circulated through an insert member having a large perforated area and a small height and containing an enclosed substance, such as grain, the circulation substance, such as water, may undesirably to a large degree pass around the enclosed substance and through the insert member's perforated portions. Above, the area of the first perforated end portion of the first portion and the height of the second portion are discussed; however similar arguments are relevant to the area of the second perforated portion of the third portion and the height of the second portion.

In one embodiment, the ratio A [m²] / h [m] is in the range from 0.1/0.7 to 0.5/0.7, preferably from 0.2/0.7 to 0.4/0.7, for instance the ratio can be 0.3/0.7. In a preferred embodiment of the insert member, h is 0.7 m and A is 0.28 m², corresponding to a circular end portion with a diameter equal to 0.6 m. It is preferred that the insert member's width is roughly equal to its height for insert members having a height close to 0.6 m. For larger insert members, the width/height ratio may decrease.

### CONICAL PORTION OF INSERT

In another preferred embodiment of the insert member, the third portion comprises a conical perforated portion and a second circular end portion. In one embodiment, the second circular end portion comprises a perforated portion. When the flow is directed from the first region to the second region through the insert member, the enclosed substance, such as grain, inside the insert member is pressed against the conical inner wall portions of the second portion of the insert member, which is advantageous since the enclosed substance is more effectively pressed towards the sides of the insert member's third portion when the perforated area has a conical shape compared to an corresponding cylindrical shape. This is because the forward flow provides forces on the enclosed substance not only directed in the direction from the first pipe member to the second pipe member but also in directions angular to this direction. In particular, when an amount of enclosed substance, such as grain, has accumulated at the insert member's third portion, the enclosed substance may itself act as a sieve. When the flow is reversed, such as by providing a backflow, the enclosed substance is reversely pressed towards the insert member's first portion.

### SEALING MEMBER

By the term 'sealing member' is meant an element to prevent leakage, for instance to provide a liquid-proof, such as a waterproof or water-resistant seal. The weight of the insert member including its contents may keep the sealing member in place. If a pressure builds up in the first or second region, preferably the second region, in case of a blockage inside the insert, the sealing member may be adapted to relieve the pressure, i.e. the sealing member may act as a pressure relief valve. The sealing member is preferably a resilient member, such as a member made of rubber or the like and the sealing member may preferably comprise an annular shape or may have at least partly a ring shape whereby the sealing member may seal against an insert with a circular cross section.

### AGITATOR

In one embodiment of the separation and/or extraction apparatus, an agitator, such as a stirrer, is provided inside the insert or in one of the first of second regions for mixing an enclosed substance, such as grain, with a circulated substance, such as water. The agitator may comprise a propeller actuated by a motor, whipping means, such as whisks, ball whisks, or blending means, in order to mix the enclosed substance with a circulated substance.

### FORWARD FLOW AND BACKFLOW

In a preferred embodiment, the separation and/or extraction apparatus is adapted to acquire a first configuration wherein the first and second pipe members are provided as, respectively, an inlet member and an outlet member, and a second configuration wherein the first and second pipe members are provided as, respectively, an outlet member and an inlet member. Further, the separation and/or extraction apparatus may be adapted to provide a forward flow in the first configuration and a reverse flow in the second configuration. In the first configuration, a forward flow may be provided through the insert member whereas the second configuration may give rise to a reverse flow, which may be referred to as a backflow.

In cases wherein in the first portion of the insert member is pointing upwards, the forces induced by the reverse flow are to some degree counteracted by the forces of gravity. Thus, in one embodiment, the enclosed substance, such as grain inside the insert member, is pressed against the insert member's first portion by the backflow and at the same time the enclosed substance is subjected to the forces of gravity. By adjusting the backflow it is thereby possible to maintain a separation and/or extraction process wherein the backflow and the forces of gravity is exploited for mixing, e.g. slowly mixing, the enclosed substance with the circulated substance. For instance, mixing aided by forces of gravity may be used to maximize extraction from the enclosed substance to the circulated substance. Thus, it is thereby possible to extract more wort from the grain compared to existing techniques.

The separation and/or extraction apparatus as described herein may comprise pumps, valves and pipes to provide a closed system.

### CIRCUIT

In another preferred embodiment of the separation and/or extraction apparatus, the first pipe member and the second pipe member are connected to a circuit portion, arranged so that at least portions of the contents of the vessel may be circulated. The circuit portions may comprise a circulation means, such as a pump or the like, to provide the circulation. For instance, the first and second pipe members may be connected to a circuit so that a circulated substance, such as water, may be circulated through the vessel.

Further, the circuit may comprise a means for adjusting temperature, such as a heat exchanger, for regulating the temperature of the circulated substance and, in addition, the heat exchanger may control the temperature of a tank jacket provided with the vessel, such that for instance steam or hot water is circulated in order to adjust the mashing temperature. The heat exchanger may be used for heating or cooling, typically the heat exchanger is used for heating the circulated substance e.g. so that the circulated substance transfers heat to the enclosed substance inside the insert member. The heat exchanger may provide a range of temperatures, such as temperatures from 0 to 100 °C, e.g. in the range from 20 to 90 °C, preferably in the range from 40 to 80 °C. The heat exchanger may also provide temperatures above 100°C, such as 100 to 200°C, e.g. such as 100 to 150°C, such as 100 to 125°C.

The separation and/or extraction apparatus may also be a tight system suitable for building up a pressure around the substances to be treated. The pressure inside the separation and/or extraction apparatus may be e.g. 1 to 20 bar, such as 2 to 15 bar, e.g. 3 to 10 bar, such as 4 to 8 bar.

Furthermore, the circuit may comprise draining means, such as a valve for draining, which is useful when the circulated substance has reached a stage where transfer to another medium is required. For instance, in brewing, the beer may be transferred to conditioning tanks, where the beer is held for a week to several months followed by filtration to remove yeast and particulates.

In another embodiment, the circuit may comprise a yeast tank so that the circulated substance, such as wort separated from grain or malt, may be transferred to said yeast tank followed by addition of yeast. In brewing, the yeast converts the sugars from the malt into alcohol, carbon dioxide and other components whereafter the produced solution may be transferred back into the vessel for further preparations.

### ARRANGEMENT MEANS

In another preferred embodiment of the separation and/or extraction apparatus, the insert member is adapted to be arranged in an operational configuration by an arrangement means. For instance, the insert member may be adapted to be arranged in a suspended configuration, such as held suspended by a suspension means. Further, the insert member may be connected to a lifting means, such as a crane. Thus, the insert member may easily be arranged in a suspended mode where it is at least partly subjected to the forces of gravity. Furthermore, the insert member may be configured to be inserted into the vessel or taken out of the vessel by the arrangement means, e.g. lowered or lifted by a crane. A time advantage is gained by an arrangement means such as a lifting means, since the insert member may simply be arranged or taken out from the vessel by the lifting means alone which is far less time consuming compared to a separation and/or extraction device with a less accessible filter. For instance it is preferred that only a single action has to be performed in arranging the insert into the vessel, e.g. the action may simply consist of lowering the insert by a lifting means, and similarly only a single action may need to be performed when the insert is taken out, e.g. lifting the insert by a crane or the like.

### SEPARATION AND/OR EXTRACTION METHOD

In a second aspect of the invention there is provided a separation and/or extraction method comprising the steps of filling the insert member with a first substance, such as grain, said first substrate comprising a second substance and a third substance; arranging the insert member in the vessel by an arrangement means, and providing a flow of a fourth substance, such as water, whereby the second substrate is separated from the third substrate. The insert member may be arranged in the vessel prior to filling the insert member or after filling the insert member. In a related method, the provided flow of a fourth substance comprises at least one forward flow and/or at least one backflow. In one embodiment, a plurality of forward flows and backflows are alternately provided, in order to maximize extraction from the substance. For instance, in a mashing process, hot water may be directed through the insert member holding an amount of grain, whereby the wort is extracted from the grain, by alternately providing forward flows and backflows whereby the grain is mixed thoroughly with the water so that the grain is frequently perturbated.

In one embodiment, the separation and/or extraction method comprises the steps of filling the insert member with a first substance comprising a second substance and a third substance; arranging the insert member in the vessel by an arrangement means, and providing a flow, such as a backflow, comprising a fourth substance, such as water, said flow being directed at least partly opposite a force means, so that the first substance is mixed with the fourth substance by the flow and the force means whereby the second substrate is separated from the third substrate. In a preferred embodiment, the force means comprises forces of gravity. Hereby, it is possible to maintain a separation and/or extraction process wherein the flow and the force means, such as forces of gravity, is exploited for mixing, e.g. slowly mixing, the first substance with the fourth substance. In one embodiment, the first substance is alternately forced against one of the perforated portions of the insert by the flow and forced away from said perforated portion by the force means. In a related embodiment, the first substance is alternately forced against one of the perforated portions of the insert by the force means and forced away from said perforated portion by the flow. In addition a combination of a forward flow, a backflow and the force means may be used to press the first substance against or away from a perforated portion and/or may be used for agitation purposes in order to maximize the separation and/or extraction process. By such a process, it is possible to extract more wort from grain in a brewing procedure.

### APPLICATIONS

The separation and/or extraction apparatus according to the invention may be used for any separation and/or extraction process normally taking place in tanks or large vessels. The separation and/or extraction apparatus is especially suitable for treatment of organic material such as plant material.

The separation and/or extraction method as described herein may be performed where the direction of the flow is altered such that the flow in each direction is performed for at least 2 min, such as at least 3 min, such as at least 4 min, such as at least 5 min, such as at least 6 min, such as at least 7 min, such as at least 8 min, such as at least 9 min, such as at least 10 min. The time for performing the flow in one direction i.e. before performing a flow in the other direction may also be about 2 min, such as about 3 min, such as about 4 min, such as about 5 min, such as about 6 min, such as about 7 min, such as about 8 min, such as about 9 min, such as about 10 min.

The separation and/or extraction method may be performed at a temperature between 0 to 200 °C, e.g. in the range from 20 to 90 °C, preferably in the range from 40 to 80 °C, such as 100 to 200 °C, e.g. such as 100 to 150 °C, such as 100 to 125 °C.

The separation and/or extraction method may be performed at a pressure between 1 to 20 bar, such as 2 to 15 bar, e.g. 3 to 10 bar, such as 4 to 8 bar.

The separation and/or extraction apparatus is particularly suitable for a mashing process, wherein the insert member is adapted to hold an amount of grain.

However, other substances, such as meat, fruit or berries, may also be used with the invention, for example the separation and/or extraction apparatus may be used for fermentation in general. E.g. enzymatic reactions may be carried out by the apparatus, for instance related to fermentation of fruits or berries whereby the protective outer layer, such as the peel, of the fruits or berries and the color of the fruits or berries can be removed and/or whereby the juice of the fruits or berries can be extracted. Moreover, the enzymatic reactions may relate to fermentation of bioethanol wherein ethanol producing microorganisms are immobilized or arranged inside the insert member.

The apparatus as described herein may also be used for removing lignin from straw e.g. before using the straw for biogas production. The process of removing lignin from straw can be performed by boiling the straw at 10-20 bar e.g at 15 bar. The temperature may be about 200 °C e.g. between 180 to 215 °C. The process is preferable performed for 1-2 hours with steam or overheated waterThe boiling process can be combined with a forward flow and backward flow of the steam or overheated water as described elsewhere herein in respect of alternating the direction of liquids.

Another application of the apparatus as described herein may be for steam washing e.g of straw to remove different salts. The temperature may be about 180 °C e.g. between 160 to 200 °C. The process is preferable performed at a pressure of 5-15 bar and e.g. for 1-2 hours. The direction of the steam is preferably from below the straw and upwards, however for shorter periods the direction of the steam can be altered. The steam washing may be performed before using the straw as a fuel.

Further applications of the apparatus described herein may be:
- Soaking of kernels before used for making bread. The kernels are soaked preferably in water for few minutes to 1 or 2 hours. The temperature of the process is preferably 20-90 °C more preferably 40-70 °C. The flow direction of water is alternated at least a few times, such as 10 times. A flow of water in one direction may be obtained for 0.5 to 20 minutes, e.g. for 1 to 10 minutes, e.g. for 2 to 5 minutes
- Marinating meat e.g. by circulating marinade through the system as described elsewhere and where the meat is located in the insert. The process parameters for marinating meat are similar to the parameters for soaking of kernels.
- Fermentation by the use of immobilized microorganisms. The organism may be located on a support which is located in the insert. The support may be pieces of foam rubber. The temperature is preferably 30-45°C, however temperatures of up to 70°C may be used. The pressure is the atmospheric pressure. The fermentation is performed for one dag to 1 or two weeks or even longer. The process may be a continuous process where media is added to the system and the fermentation product is removed from the system.

### Brief description of the drawings

The invention is disclosed in more detail with reference to the accompanying drawings, in which:
- Fig. 1: is a side view of the separation and/or extraction apparatus according to a preferred embodiment of the invention,
- Fig. 2: is a side view of the separation and/or extraction apparatus according to another embodiment,
- Fig. 3: is a side view of the separation and/or extraction apparatus wherein the insert is taken out and filled with grain,
- Fig. 4: is a side view of the separation and/or extraction apparatus wherein the insert carrying grain is lowered into the tank,
- Fig. 5: is a side view of the separation and/or extraction apparatus wherein the grain is scattered inside the insert,
- Fig. 6: is a side view of the separation and/or extraction apparatus wherein a forward flow is applied,
- Fig. 7: is a side view of the separation and/or extraction apparatus wherein a reverse flow is provided,
- Fig. 8: is a side view of the separation and/or extraction apparatus wherein the insert carrying used grain is taken out, and
- Fig. 9: is a graph showing the temperature vs time corresponding to a particular brewing process.

### Detailed description of the drawings

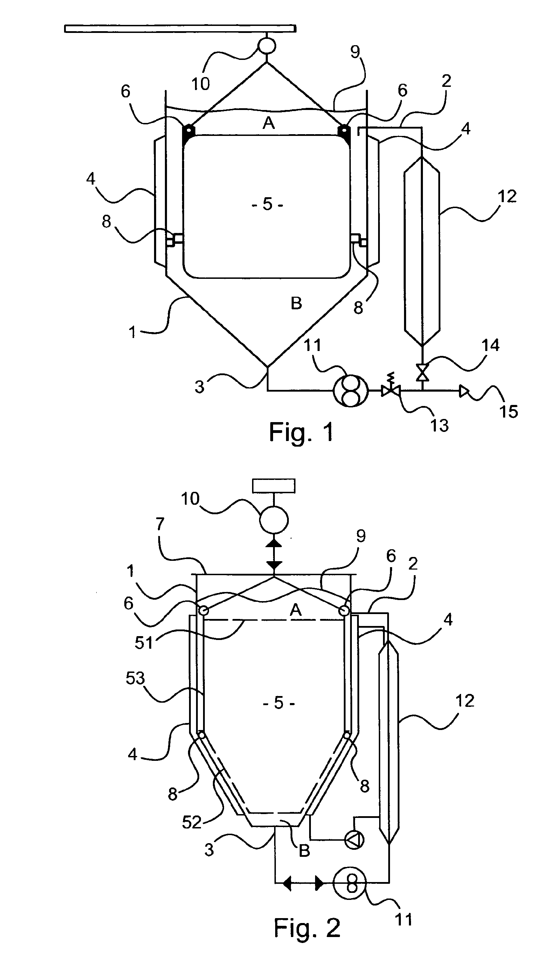

With reference to Fig. 1 and Fig. 2, the separation and/or extraction apparatus is used in beer production or other separation and/or extraction processes and comprises a vessel, such as a tank 1 having a first pipe member 2, a second pipe member 3, and a tank jacket 4, such as a coolant jacket and/or a heating jacket. An insert 5, which in beer production holds an amount of grain, may have a first perforated portion 51, a conical second perforated portion 52, a middle portion 53, and eye bolts 6 is arranged in the tank. The tank may be closed with a tank lid 7 in order to reduce evaporation. A sealing member 8 between the insert and the tank divides the tank into a first region A and a second region B. The water level 9 of the tank is above the insert 5 and above the first pipe member 2. A suspension means, such as a crane or pulley system 10 may lift or lower the insert 5 into or out of the tank. The first and second pipe members 2, 3 are connected to a circuit comprising a pump 11 for forward flow or reverse flow, a heat exchanger 12 for adjusting the temperature of the tank shell and the temperature of the water passing through the tank. The circuit has a safety valve 13, a three-way valve for draining 14 and a connection way 15 for a yeast tank and/or another tank such as a storage tank.

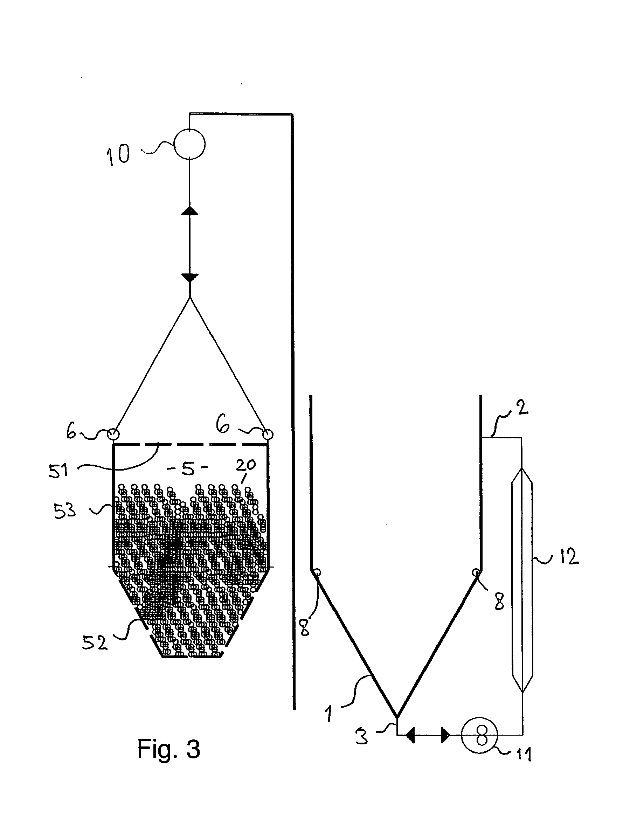

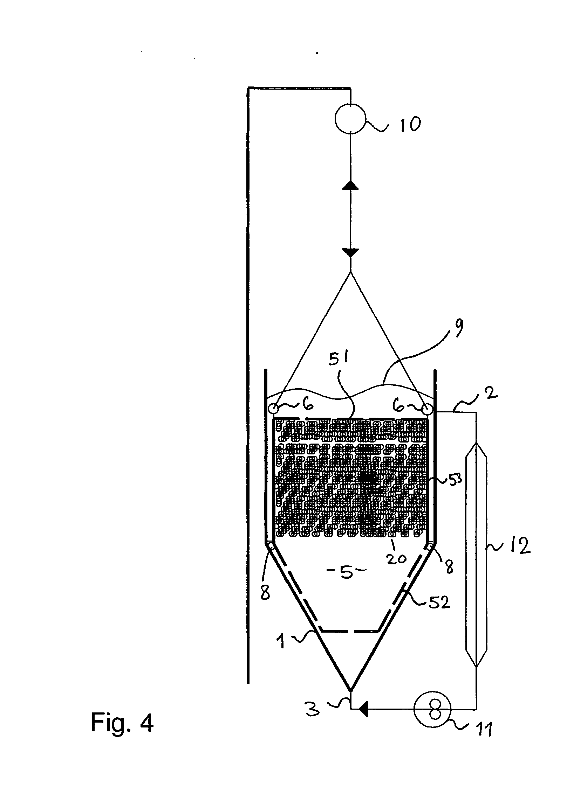

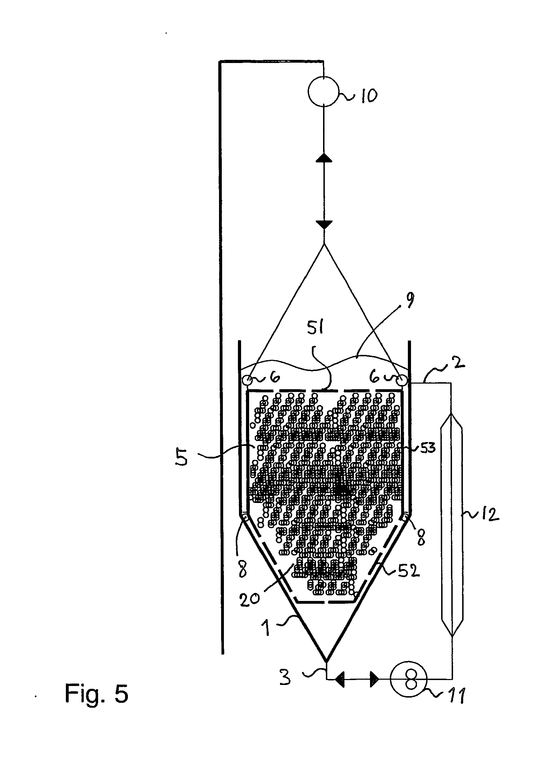

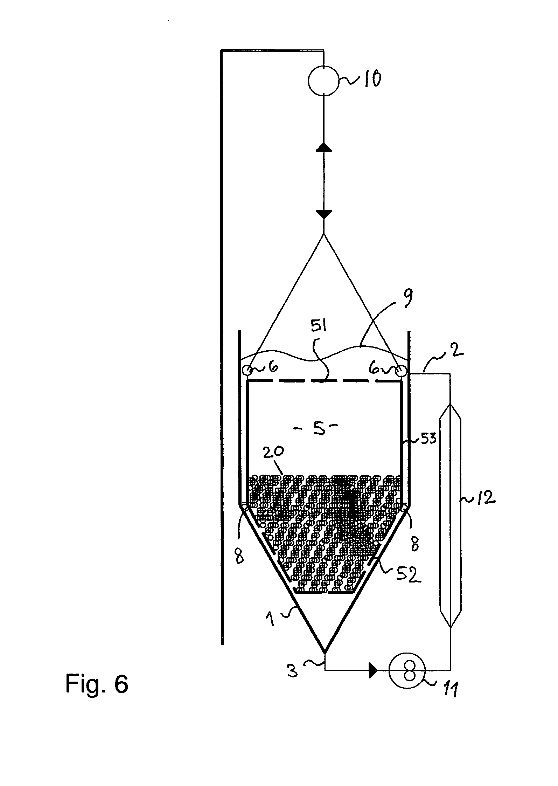

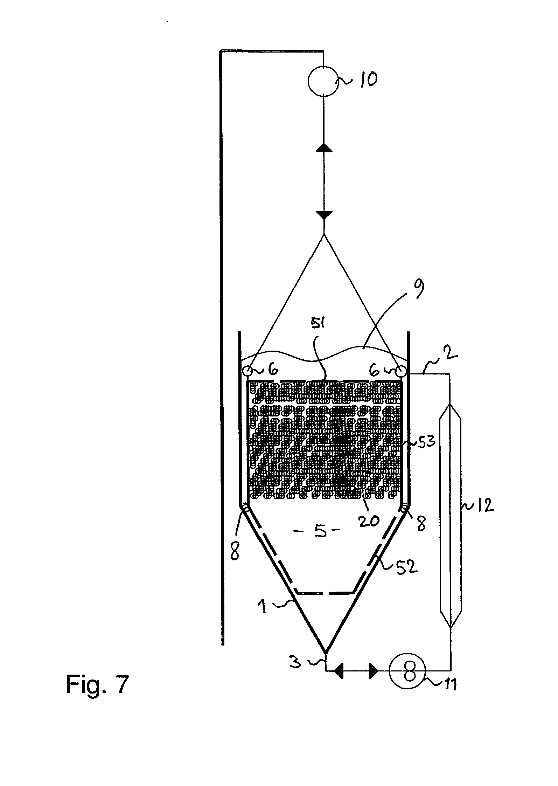

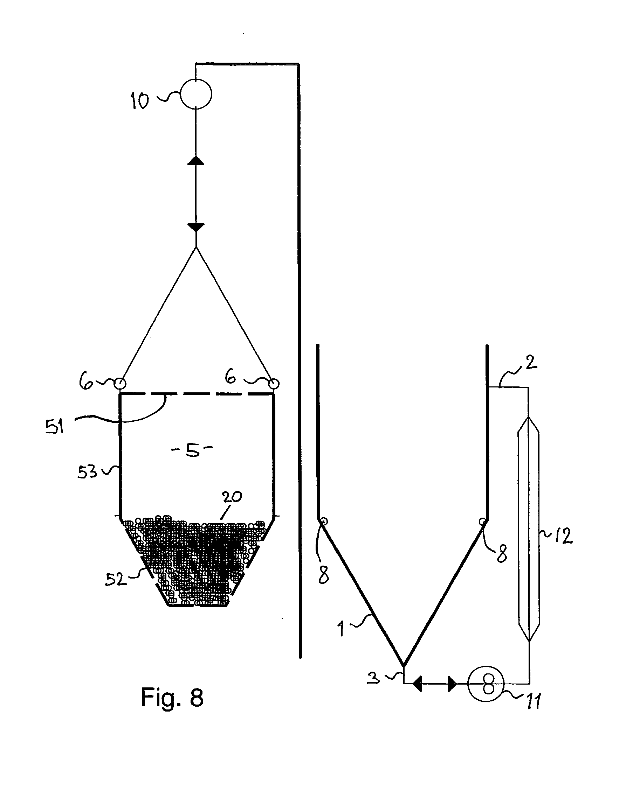

With reference to Fig. 3-8, it is shown how a separation and/or extraction apparatus according to the invention may work during a part of a brewing or another separation and/or extraction procedure. The insert 5 is filled with grain 20, cf. Fig. 3, whereafter the insert 5 by a crane 10 is lifted and lowered into the tank 1, cf. Fig. 4. When the tank 1 is filled with water, which can be performed before or after lifting the insert into the tank 1, the grain 20 will spread inside the insert, cf. Fig. 5, after which a forward flow is provided, cf. Fig. 6, followed by a backflow, cf. Fig. 7. In particular, the forward flow and the backflow may be alternated a number of times to achieve improved separation/extraction and lastly the insert 5 is lifted and removed from the tank 1 by the crane 10, whereafter the insert 5 and tank 1 are easily emptied and cleaned. The tank 1 may be emptied before removing the insert 5 from the tank 1. After the insert 5 is emptied, the material e.g. grain in the insert 5 may be subjected to a washing process e.g. by spraying with clean water.

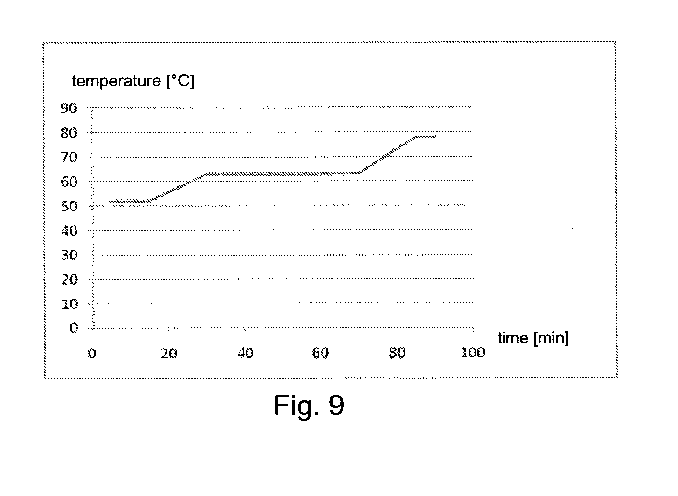

The temperature graph of Figure 9 is further described in Example 1 below.

### Examples

### Example 1

In one embodiment, the insert may have a volume of 180 liters. From use of the apparatus, it is found that 5 liters of pilsener beer may be produced per 1 kg grain. Typically in the brewing process, it is desired to produce wort using as little water as possible whereafter water is added for standardization. In one particular brewing process, 200 liter of water and 50 kg of grain were used with the separation and/or extraction apparatus and as a result the ethanol content of the produced beer before standardization was found to be 6 percent.

The steps in the brewing process may be carried out as follows. 200 liters of water is poured into the vessel and pre-heated to 54 °C. 50 kg of broken grain is arranged in the insert. The temperature has now decreased slightly to 52 °C, and the insert is arranged in the vessel. The water is circulated by an associated pump for 15 min and the flow direction is changed every 2 min. At this point the temperature is raised from 52 °C to 63 °C. The pump is set to deliver a backflow when the temperature is raised. For the next 45 min, the pump is set to circulate the liquid such that the flow direction is changed by the pump every 2 min. After the 45 min has passed, the temperature is raised to 78 °C. When 78 °C is reached, the pump circulates the liquid for 10 min with a flow change every 2 min. A temperature graph of the process described above is shown in Fig. 9.

The wort is then pumped to the wort boiling tub. 30 liters of water is used for sparging and the sparging water is pumped to the boiling tub. The pump is still running at this point in order to produce a vacuum beneath the mash so that the mash is further dried out. Hops are then added to the wort followed by boiling for 1 hour. The wort is now sterily transferred to the sterilized fermentor, such as a yeast tank, by use of the heat exchanger whereby the temperature of the wort is lowered to approximately 20 °C. The transfer is carried out by applying a pressure difference in the fermentor. Inoculation is performed by a sterile nozzle. The wort is left undisturbed for approximately 10 days and thus changed into beer. The tank and beer are now cooled to 0 °C and the yeast is removed. Lastly, the beer is transferred into sterilized pressure tanks.

While specific and preferred embodiments of the invention have been shown and described in detail above to illustrate the inventive principles, it will be understood that variants to these embodiments may be provided without departing from the scope of the invention as set forth in the accompanying claims.

### Example 2

50 kg of flatten barley malt were located in an insert with a volume of 180 liter. 175 liter of water was added to the apparatus thus also occupying volume outside of the insert. The soaking process was performed by a stepwise increase of the temperature: 53 °C for 30 min, 64 °C for 70 min, 68 °C for 10 min and 80 °C for 5 min. The process was performed at atmospheric pressure and the flow direction was altered between 10 and 20 minutes throughout the process. After this the water (wort) was drained from the apparatus and the mash was washed with 35 liter of water. In total 200 liter wort was produced with a sugar content of 15.6° Brix.

## Claims

1. A separation and/or extraction apparatus comprising
a vessel (1) having an outer vessel wall and an inner vessel wall, said inner vessel wall having a first sealing portion,
an insert member (5) comprising a container member, said container member having an outer container wall and an inner container wall, said container comprising
a first portion having at least one first perforated portion (51);
a second portion having a second sealing portion, and
a third portion having at least one second perforated portion (52),
a sealing member (8) for sealing between the first sealing portion and the second sealing portion, said sealing member (8) provided at a level of the vessel (1), said level dividing the inner space of the vessel (1) into a first region and a second region, and said sealing member (8) having a shape matching the first and second sealing portions; said first perforated portion (51) provided in the first region, and said second perforated portion (52) provided in the second region,
a first pipe member (2) connected to the first region, and
a second pipe member (3) connected to the second region.

2. The separation and/or extraction apparatus according to claim 1, wherein the insert member (5) is a removable insert and/or wherein the second portion is non-perforated.

3. The separation and/or extraction apparatus according to any of the preceding claims, wherein the second portion comprises a section with a height h, such as a cylinder-shaped section, and wherein the first portion comprises a first perforated end portion, such as a circular end portion, with an area A.

4. The separation and/or extraction apparatus according to claim 3, wherein a ratio A / h is in the range from 0.1/0.7 to 0.5/0.7, preferably from 0.2/0.7 to 0.4/0.7, for instance 0.3/0.7.

5. The separation and/or extraction apparatus according to any of the preceding claims, wherein said first and/or second portion each comprises an opening means.

6. The separation and/or extraction apparatus according to claim 5, wherein to each of said opening means is connected a filter.

7. The separation and/or extraction apparatus according to claim 6, wherein said filter has openings of between 100 mm to 100 nm, e.g. in the range from 10 mm to 1 micrometer such as for instance 1 mm to 10 micrometer, or in the range from 500 micrometer to 100 micrometer, such as preferably 300 micrometer.

8. The separation and/or extraction apparatus according to any of the preceding claims, further comprising pumps, valves and pipes to provide a closed system, said pumps, valves and pipes preferably allow a flow of liquid in alternating direction through the apparatus.

9. The separation and/or extraction apparatus according to any of the preceding claims, wherein the insert member (5) is adapted to be arranged in an operational configuration by an arrangement means.

10. The separation and/or extraction apparatus according to claim 9, wherein the insert member (5) is configured to be inserted into the vessel (1) or taken out of the vessel (1) by the arrangement means and/or wherein the insert member (5) is adapted to be arranged in a suspended configuration, such as held suspended by a suspension means.

11. The separation and/or extraction apparatus according to any of the preceding claims, adapted to acquire a first configuration wherein the first and second pipe members (2, 3) are provided as, respectively, an inlet member and an outlet member, and a second configuration wherein the first and second pipe members (2, 3) are provided as, respectively, an outlet member and an inlet member.

12. The separation and/or extraction apparatus according to claim 11, adapted to provide a forward flow in the first configuration and a reverse flow in the second configuration.

13. The separation and/or extraction apparatus according to any of the preceding claims, wherein the first pipe member (2) and the second pipe member (3) are connected to a circuit portion, arranged so that at least portions of the contents of the vessel (1) may be circulated.

14. A separation and/or extraction method, using an apparatus according to any of the claims 1-13 and comprising the steps of:
- filling the insert member (5) with a first substance, such as grain (20), said first substrate comprising a second substance and a third substance;
- arranging the insert member (5) in the vessel (1) by an arrangement means, wherein the arranging of the insert member (5) in the vessel (1) is performed prior to filling the insert member (5) or after filling the insert member (5) and
- providing a flow of a fourth substance, such as water, whereby the second substrate is separated from the third substrate.

15. A separation and/or extraction method according to claim 14, comprising the steps of
- filling the insert member (5) with a first substance, such as grain (20), said first substrate comprising a second substance and a third substance;
- arranging the insert member (5) in the vessel (1) by an arrangement means, wherein the arranging of the insert member (5) in the vessel (1) is performed prior to filling the insert member (5) or after filling the insert member (5) and
- providing a flow, such as a backflow, comprising a fourth substance, such as water, said flow being directed at least partly opposite a force means, so that the first substance is mixed with the fourth substance by the flow and the force means whereby the second substrate is separated from the third substrate.

## Patentansprüche

1. Trenn- und/oder Extraktionsvorrichtung, welche umfasst:
einen Behälter (1) mit einer äußeren Behälterwandung und einer inneren Behälter-wandung, worin die innere Behälterwandung einen ersten Dichtbereich aufweist,
ein Insertelement (5) mit einem Behälterelement, worin das Behälterelement eine äußere Behälterwandung und eine innere Behälterwandung aufweist, worin der Behälter umfasst
einen ersten Bereich mit einem ersten perforierten Bereich (51),
einen zweiten Bereich mit einem Dichtbereich, und
einen dritten Bereich mit mindestens einem zweiten perforierten Bereich (52),
ein Dichtelement (8) zum Abdichten zwischen dem ersten Dichtbereich und dem zweiten Dichtbereich, worin das Dichtelement (8) an einer Höhe des Behälters (1) vorgesehen ist, das den inneren Bereich des Behälters (1) in einen ersten Bereich und einen zweiten Bereich unterteilt, und worin das Dichtelement (8) eine Form aufweist, die zu dem ersten und zweiten Dichtbereich passt, worin der erste perforierte Bereich (51) in dem ersten Bereich vorgesehen ist, und worin der zweite perforierte Bereich (52) in dem zweiten Bereich vorgesehen ist,
ein erstes Leitungselement (2), das mit dem ersten Bereich verbunden ist, und
ein zweites Leitungselement (3), das mit dem zweiten Bereich verbunden ist.

2. Trenn- und/oder Extraktionsvorrichtung nach Anspruch 1, worin das Insertelement (5) ein entfernbares Insert ist und/oder worin der zweite Bereich nicht perforiert ist.

3. Trenn- und/oder Extraktionsvorrichtung nach einem der vorstehenden Ansprüche, worin der zweite Bereich einen Abschnitt mit einer Höhe h umfasst, wie einen zylinderförmigen Abschnitt, und worin der erste Bereich einen ersten perforierten Endbereich umfasst, wie einen ringförmigen Endbereich, mit einem Bereich A.

4. Trenn- und/oder Extraktionsvorrichtung nach Anspruch 3, worin ein Verhältnis A/h im Bereich von 0,1/0,7 bis 0,5/0,7, vorzugsweise von 0,2/0,7 bis 0,4/0,7, beispielsweise 0,3/0,7 liegt.

5. Trenn- und/oder Extraktionsvorrichtung nach einem der vorstehenden Ansprüche, worin der erste und/oder zweite Bereich jeweils Öffnungsmittel umfasst.

6. Trenn- und/oder Extraktionsvorrichtung nach Anspruch 5, worin an jedem Öffnungsmittel ein Filter verbunden ist.

7. Trenn- und/oder Extraktionsvorrichtung nach Anspruch 6, worin der Filter Öffnungen zwischen 100 mm bis 100 nm aufweist, beispielsweise im Bereich von 10 mm bis 1 Mikrometer, wie beispielsweise 1 mm bis 10 Mikrometer, oder im Bereich von 500 Mikrometer bis 100 Mikrometer, wie vorzugsweise 300 Mikrometer.

8. Trenn- und/oder Extraktionsvorrichtung nach einem der vorstehenden Ansprüche, welche weiter Pumpen, Ventile und Leitungen umfasst, um ein geschlossenes System zu liefern, worin die Pumpen, Ventile und Leitungen vorzugsweise einen Flüssigkeitsstrmo durch die Vorrichtung in wechselnder Richtung ermöglichen.

9. Trenn- und/oder Extraktionsvorrichtung nach einem der vorstehenden Ansprüche, worin das Insertelement (5) angepasst ist, durch Anordnungsmittel in einer Betriebskonfiguration angeordnet zu werden.

10. Trenn- und/oder Extraktionsvorrichtung nach Anspruch 9, worin das Insertelement (5) konfiguriert ist, durch die Anordnungsmittel in den Behälter (1) eingebracht oder aus dem Behälter (1) entnommen zu werden, und/oder worin das Insertelement (5) angepasst ist, in einer aufgehängten Konfiguration angeordnet zu werden, wie durch Aufhängmittel aufgehängt gehalten.

11. Trenn- und/oder Extraktionsvorrichtung nach einem der vorstehenden Ansprüche, welche angepasst ist, eine erste Konfiguration anzunehmen, worin das erste und zweite Leitungselement (2, 3) jeweils als Einlaßelement und Auslaßelement bereitgestellt ist, und eine zweite Konfiguration, worin das erste und zweite Leitungselement (2, 3) jeweils als Auslaßelement und Einlaßelement bereit gestellt ist.

12. Trenn- und/oder Extraktionsvorrichtung nach Anspruch 11, welche angepasst ist, einen Vorwärtsstrom in die erste Konfiguration und einen Rückwärtsstrom in die zweite Konfiguration zu liefern.

13. Trenn- und/oder Extraktionsvorrichtung nach einem der vorstehenden Ansprüche, worin das erste Leitungselement (2) und das zweite Leitungselement (3) mit einem Leitungsbereich verbunden sind, der angeordnet ist, so dass mindestens Bereiche des Inhalts des Behälters (1) zirkuliert werden können.

14. Trenn- und/oder Extraktionsverfahren, wobei eine Vorrichtung nach einem der Ansprüche 1 - 13 eingesetzt wird und die Schritte umfasst:
Füllen des Insertelements (5) mit einer ersten Substanz, wie Korn (20), worin das erste Substrat eine zweite Substanz und eine dritte Substanz umfasst,
Anordnen des Insertelements (5) in dem Behälter (1) durch Anordnungsmittel, worin das Anordnen des Insertelements (5) in dem Behälter (1) vor dem Füllen des Insertelements (5) oder nach dem Füllen des Insertelements (5) durchgeführt wird, und
Bereitstellen eines Stroms einer vierten Substanz, wie Wasser, wobei das zweite Substrat von dem dritten Substrat getrennt wird.

15. Trenn- und/oder Extraktionsverfahren nach Anspruch 14, welches die Schritte umfasst,
Füllen des Insertelements (5) mit einer ersten Substanz, wie Korn (20), worin das erste Substrat eine zweite Substanz und eine dritte Substanz umfasst,
Anordnen des Insertelements (5) durch Anordnungsmittel in dem Behälter (1), wobei das Anordnen des Insertelements (5) in dem Behälter (1) vor dem Füllen des Insertelements (5) oder nach dem Füllen des Insertelements (5) erfolgt, und
Liefern eines Stroms, wie eines Rückstroms, welcher eine vierte Substanz umfasst, wie Wasser, wobei der Strom mindestens teilweise gegen ein Drückmittel gerichtet ist, so dass die erste Substanz mit der vierten Substanz durch den Strom und die Drückmittel vermischt wird, wobei das zweite Substrat von dem dritten Substrat getrennt wird.

## Revendications

1. Appareil de séparation et/ou d'extraction comprenant
un récipient (1) ayant une paroi de récipient externe et une paroi de récipient interne, ladite paroi de récipient interne ayant une première portion d'étanchéité,
un organe d'insert (5) comprenant un organe de conteneur, ledit organe de conteneur ayant une paroi de conteneur externe et une paroi de conteneur interne, ledit conteneur comprenant :
une première portion ayant au moins une première portion perforée (51) ;
une deuxième portion ayant une deuxième portion d'étanchéité, et
une troisième portion ayant au moins une deuxième portion perforée (52),
un organe d'étanchéité (8) pour assurer l'étanchéité entre la première portion d'étanchéité et la deuxième portion d'étanchéité, ledit organe d'étanchéité (8) étant fourni à un niveau du récipient (1), ledit niveau divisant l'espace intérieur du récipient (1) en une première région et une deuxième région, et ledit organe d'étanchéité (8) ayant une forme correspondant aux première et deuxième portions d'étanchéité ; ladite première portion perforée (51) étant fournie dans la première région, et ladite deuxième portion perforée (52) étant fournie dans la deuxième région,
un premier organe de tuyau (2) relié à la première région, et
un deuxième organe de tuyau (3) relié à la deuxième région.

2. Appareil de séparation et/ou d'extraction selon la revendication 1, dans lequel l'organe d'insert (5) est un insert amovible et/ou dans lequel la deuxième portion n'est pas perforée.

3. Appareil de séparation et/ou d'extraction selon l'une quelconque des revendications précédentes, dans lequel la deuxième portion comprend une section avec une hauteur h, comme une section de forme cylindrique, et dans lequel la première portion comprend une première portion d'extrémité perforée, comme une portion d'extrémité circulaire, avec une surface A.

4. Appareil de séparation et/ou d'extraction selon la revendication 3, dans lequel un rapport A/h est dans la plage de 0,1/0,7 à 0,5/0,7, de préférence de 0,2/0,7 à 0,4/0,7, par exemple 0,3/0,7.

5. Appareil de séparation et/ou d'extraction selon l'une quelconque des revendications précédentes, dans lequel ladite première portion et/ou ladite deuxième portion comprennent chacune un moyen d'ouverture.

6. Appareil de séparation et/ou d'extraction selon la revendication 5, dans lequel chacun desdits moyens d'ouverture est relié à un filtre.

7. Appareil de séparation et/ou d'extraction selon la revendication 6, dans lequel ledit filtre a des ouvertures de 100 mm à 100 nm, par exemple dans la plage de 10 mm à 1 µm, comme de 1 mm à 10 µm, ou dans la plage de 500 µm à 100 µm, comme de préférence 300 µm.

8. Appareil de séparation et/ou d'extraction selon l'une quelconque des revendications précédentes, comprenant en outre des pompes, des vannes et des tuyaux pour fournir un système fermé, lesdites pompes, lesdites vannes et lesdits tuyaux permettant de préférence un flux de liquide en va-et-vient à travers l'appareil.

9. Appareil de séparation et/ou d'extraction selon l'une quelconque des revendications précédentes, dans lequel l'organe d'insert (5) est apte à être agencé dans une configuration opérationnelle par un moyen d'agencement.

10. Appareil de séparation et/ou d'extraction selon la revendication 9, dans lequel l'organe d'insert (5) est configuré pour être inséré dans le récipient (1) ou sortie du récipient (1) par le moyen d'agencement et/ou dans lequel l'organe d'insert (5) est apte à être agencé dans une configuration suspendue, comme en étant maintenu suspendu par un moyen de suspension.

11. Appareil de séparation et/ou d'extraction selon l'une quelconque des revendications précédentes, apte à prendre une première configuration dans laquelle les premier et deuxième organes de tuyau (2, 3) sont fournis respectivement en tant qu'un organe d'entrée et un organe de sortie, et une deuxième configuration dans laquelle les premier et deuxième organes de tuyau (2, 3) sont fournis respectivement en tant qu'un organe de sortie et un organe d'entrée.

12. Appareil de séparation et/ou d'extraction selon la revendication 11, apte à fournir un flux vers l'avant dans la première configuration et un flux vers l'arrière dans la deuxième configuration.

13. Appareil de séparation et/ou d'extraction selon l'une quelconque des revendications précédentes, dans lequel le premier organe de tuyau (2) et le deuxième organe de tuyau (3) sont reliés à une portion de circuit agencée de sorte qu'au moins des portions du contenu du récipient (1) puissent circuler.

14. Procédé de séparation et/ou d'extraction, utilisant un appareil selon l'une quelconque des revendications 1 à 13 et comprenant les étapes de :
- le remplissage de l'organe d'insert (5) avec une première substance, comme du grain (20), ladite première substance comprenant une deuxième substance et une troisième substance ;
- l'agencement de l'organe d'insert (5) dans le récipient (1) par un moyen d'agencement, dans lequel l'agencement de l'organe d'insert (5) dans le récipient (1) est effectué avant le remplissage de l'organe d'insert (5) ou après le remplissage de l'organe d'insert (5), et
- la fourniture d'un flux d'une quatrième substance, comme de l'eau, de telle manière que la deuxième substance soit séparée de la troisième substance.

15. Procédé de séparation et/ou d'extraction selon la revendication 14, comprenant les étapes de
- le remplissage de l'organe d'insert (5) avec une première substance, comme du grain (20), ladite première substance comprenant une deuxième substance et une troisième substance ;
- l'agencement de l'organe d'insert (5) dans le récipient (1) par un moyen d'agencement, dans lequel l'agencement de l'organe d'insert (5) dans le récipient (1) est effectué avant le remplissage de l'organe d'insert (5) ou après le remplissage de l'organe d'insert (5), et
- la fourniture d'un flux, comme un reflux, comprenant une quatrième substance, comme de l'eau, ledit flux étant dirigé au moins partiellement à l'opposé d'un moyen de force, de sorte que la première substance soit mélangée à la quatrième substance par le flux et le moyen de force de telle manière que la deuxième substance soit séparée de la troisième substance.
